# EUROPEAN PATENT APPLICATION

(11) **EP 1 722 132 A2**
(43) Date of publication of application: **15.11.2006**
(21) Application number: 06008961.2
(22) Date of filing: 28.04.2006
(51) Int. Cl.: F16H 57/02

(54) **Mechanical power transmission apparatus, a vehicle provided therewith and method for assembling it**

(30) Priority: 12.05.2005 JP 2005139471
(71) Applicant: Mazda Motor Corporation, Aki-gun, Hiroshima 730-8670 (JP)
(72) Inventor: Akutagawa, Hitoshi, Aki-gun Hiroshima 730-8670 (JP)
(74) Representative: Müller-Boré & Partner Patentanwälte

(57) **Abstract**

A power transmission apparatus (1) comprises a case (2,102) defining a cavity, moveable parts arranged within the cavity, fixed parts arranged within the cavity, the fixed parts including parts moveably supporting the moveable parts, a wall at least partly constituting said case, and a thin wall portion formed in the wall, the thin wall portion (3c) being constantly pressed in an outward direction of the cavity by one of the fixed parts, so as to increase its rigidity. Membranous vibration of the case wall may be effectively controlled and the radiation noise from the transmission apparatus can be reduced without increasing the thickness of the transmission case wall or arranging ribs on it.

## Description

The present description relates to a mechanical power transmission apparatus, to a vehicle provided therewith and to a method of assembling it, and in particular relates to reduction of noise radiated from an automotive transmission.

A mechanical power transmission apparatus, such as an automotive transmission shown in Japanese patent application publication H4-113052, may comprise a case, rotational shafts, gears on the shafts or other moveable parts, and bearing to support the shafts or other fixed parts. The rotational parts inside of the transmission case may generate vibration or noise, such as tooth tapping noise. It may vibrate the wall of the transmission case. This membranous vibration of the case wall may vibrate the surrounding air to generate radiation noise. To prevent the membranous vibration of the case wall, its thickness may be increased. But it may result to weight increase of the transmission case, which may not be acceptable, especially, when the transmission is mounted on a vehicle, due to potential fuel economy impact caused by the weight increase.

The above Japanese patent application publication describes a method to suppress the membranous vibration of the transmission case without generally thickening the case wall by arranging ribs on the case wall so as to increase its rigidity. However, the arrangement of the ribs on the transmission case may increase overall size of the power transmission apparatus, which may lead to constraint of packaging it into a surrounding system such as an automotive vehicle.

The inventor herein has recognized the disadvantage of the above method and needs to reduce the noise radiation from the power transmission apparatus while keeping light weight and small size.

This object is solved according to the invention by the features of the independent claims. Preferred embodiments of the invention are subject of the dependent claims.

According to the present invention, there is provided a mechanical power transmission apparatus comprising:
a case defining a cavity;
moveable parts arranged at least partly within said cavity;
one or more fixed parts arranged at least partly within said cavity, the fixed parts including one or more parts moveably supporting said moveable parts; and
a wall at least partly constituting said case,
wherein said wall has a thin wall portion formed therein, and that the said thin wall portion is substantially constantly pressed in an outward direction of said cavity by one of said fixed parts.

In accordance with this apparatus, by the one of the fixed parts pressing the thin wall portion substantially in the outward direction of the cavity, the thin wall portion may be preloaded particularly so as to increase its rigidity. Therefore, the membranous vibration of the case wall may be effectively controlled and the radiation noise from the transmission apparatus can be reduced particularly without increasing the thickness of the transmission case wall and/or arranging one or more ribs on it.

Particularly, in preferred embodiment of the present invention, there is provided a mechanical power transmission apparatus, such as an automotive transmission, at least part of which is mounted under a floor panel of an automotive vehicle. The power transmission apparatus comprises a case defining a cavity, moveable parts, such as sliding rods, levers, shafts and gears, arranged within the cavity, fixed parts, such as bearing support, arranged within the cavity, the fixed parts including parts moveably supporting the moveable parts, a wall at least partly constituting said case, and a thin wall portion formed in the wall, the thin wall portion being constantly pressed in an outward direction of the cavity by one of the fixed parts, such as a shift rod support member, a resilient member or a damping member.

According to a preferred embodiment of the invention, said case comprises:
an opening; and
a cover which is to be attached to said case to at least partly close said opening and comprises at least a part of said thin wall portion.

Preferably, said one of said fixed parts is to be attached to said cover at a surrounding of or adjacent to said thin wall portion.

Further preferably, a resilient member is arranged at least partly between said thin wall portion and said one of said fixed parts and preferably resiliently presses said thin wall portion.

Still further preferably, a resilient member is arranged at least partly between said thin wall portion and said wall of said case.

Most preferably, an elastomeric member which is arranged between said thin wall portion and said resilient member and which preferably elastomerically presses said thin portion.

According to a further preferred embodiment of the invention, said fixed part, preferably said resilient member comprises a leaf spring.

Preferably, said one of said fixed parts slidably supports a rod.

Further preferably, said rod comprises a shift rod which substantially axially moves for switching gears transmitting power.

Most preferably, said mechanical power transmission apparatus is to be arranged under a floor panel of an automotive vehicle.

According to the present invention, there is further provided an automotive vehicle comprising a power transmission apparatus according to the invention or a preferred embodiment thereof.

According to a further preferred embodiment of the invention, said mechanical power transmission apparatus is arranged under a floor panel of the automotive vehicle.

According to the present invention, there is still further provided an assembly process for assembling a mechanical power transmission apparatus, in particular according to the invention or a preferred embodiment thereof, the process comprising the following steps:
providing a case defining a cavity and being at least partly defined by a wall having a thin wall portion formed therein;
at least partly arranging moveable parts within said cavity being supported by one or more fixed parts arranged at least partly within said cavity;
and
substantially constantly pressing said thin wall portion in an outward direction of said cavity by one of said fixed parts.

According to a preferred embodiment of the invention, the fixed parts, preferably comprising at least one of a resilient member and a damping element, are installed prior to arranging of the moveable parts, preferably comprising a shift rod support member.

According to a further aspect of the invention, there is provided an automotive transmission, at least part of the transmission being arranged under a floor of an automotive vehicle, comprising
a case defining a cavity;
moveable parts arranged within said cavity;
fixed parts arranged within said cavity, the fixed parts including parts moveably supporting said moveable parts;
a wall at least partly constituting said case;
a thin wall portion formed in said wall and facing said vehicle floor from the underneath, the thin wall portion being constantly pressed upwardly by one of said fixed parts.

According to a preferred embodiment of this aspect, said case having an opening, and wherein a cover includes said thin wall portion and is attached to said case to close said opening .

Preferably, said moveable parts include a shift rod axially slide to shift gears of said automotive transmission, and wherein said one of said fixed parts is a support member which slidably supports said shift rod.

According to still a further aspect of the invention, there is provided a mechanical power transmission apparatus comprising:
a case defining a cavity;
moveable parts arranged within said cavity;
fixed parts arranged within said cavity, the fixed parts including parts moveably supporting said moveable parts;
an opening provided on said case;
a cover which is attached to said case to close said opening, which comprises a thin wall portion formed therein, and which one of said fixed parts is attached to at the surrounding of said thin wall portion; and
a spring member which is arranged between said thin wall portion and said one of said fixed parts for pressing said thin wall portion outwardly.

Preferably, the mechanical power transmission apparatus further comprises a damping member which is primarily made of elastomer and which is arranged between said thin wall portion and said spring member.

The advantages described herein will be more fully understood by reading an example of an embodiment in which the invention is used to advantage, referred to herein as the Detailed Description. It should be understood that even though embodiments are separately described, single features thereof may be combined to additional embodiments.
Figure 1 is a partially cutout outside view of an automotive transmission laterally mounted on an automotive vehicle in accordance with an embodiment of the present description;
Figure 2 is a partial perspective view of the automotive transmission showing a shift operation mechanism;
Figure 3 is an exploded view of part of the automotive transmission showing a cover, shift rod support member, a leaf spring member and a damping sheet;
Figure 4 is (a) a plane view of the leaf spring member and (b) a vertical sectional view showing the leaf spring member and the surrounding parts; and
Figure 5 is a perspective view of the sub-assembled cover and shift rod support member of the automotive transmission in accordance with the embodiment of the present description.

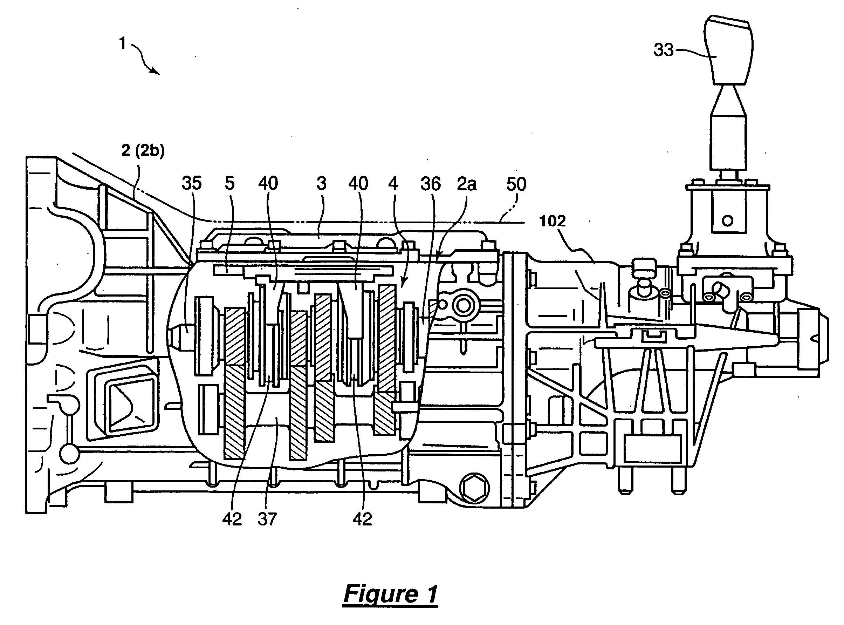

There is shown in Figure 1 a mechanical power transmission apparatus 1 according to a preferred embodiment of the present invention. In particular, the mechanical power transmission apparatus 1 in this embodiment is an automotive transmission which is mounted or mountable (preferably substantially longitudinally) on or in an automotive vehicle substantially under its floor panel 50, and which can be preferably manually operated with a shift lever 33. Then it is so called a longitudinally mounted manual transmission having therein an input shaft 35, an output shaft 36 and a counter shaft 37, all of which preferably extend substantially in the longitudinal direction of the automotive vehicle. The transmission apparatus 1 comprises a front case 2 and a rear case 102 which are to be connected with each other by one or more fasteners such as bolts as is well known in the art. The front case 2 connects at its front end to an engine (not shown) preferably through a clutch housing also not shown as is well known in the art. A propeller shaft (not shown) emerges from or at a rear end of the rear case 102, so as to transmit power from the engine to driving wheels through other part of the drive-train such as differential gear set and drive shafts.

A gear-train 4 is provided in the front case 2. The gear-train 4 comprises a plurality of gear sets comprising free rotating gears coaxially and rotatably arranged on either of the input and output shafts 35 and 36 and fixed gears affixed to the counter shaft 37 and meshed with the respective free rotating gears. By moving a synchronizer ring 42 substantially in axial direction to engage an associated dog clutch by means of a gearshift operating mechanism 30, either of the free rotating gears may be selected to couple with the input shaft 35 so as to substantially uniformly rotate with it to transmit power through the selected one of the gear sets. By switching or operating the gear sets, the gear ratio can be changed or the gear shifting can be made, as is well known in the art.

On the upper surface of the front case 2, there is provided an opening 2a. A top cover 3 is to be fastened to the front case 2 with one or more fasteners such as bolts around the opening 2a so as to at least partly close the opening 2a. When the transmission apparatus 1 is mounted on the automotive vehicle, there is the floor panel 50 of the vehicle just above or substantially adjacent the top cover 3. The gap between the floor panel 50 and the top cover 3 is preferably smaller in order to make more space for a passenger compartment above the floor panel 50 by lowering the height of floor. To make that gap small, the top cover 3 does not have any ribs on its upper (or outer) and/or lower (or inner) top surface which preferably is made substantially flat as well, so that overall wall thickness of its center or intermediate portion is thinner than that of the surrounding portion to make a thin wall portion 3c.

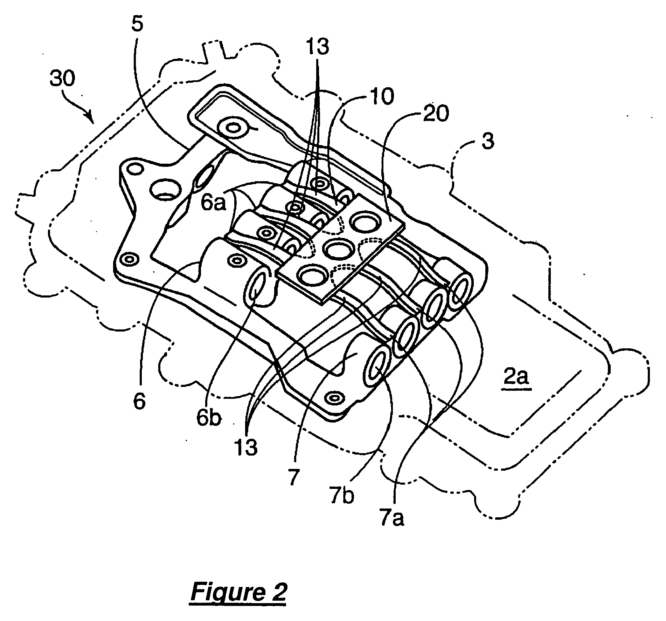

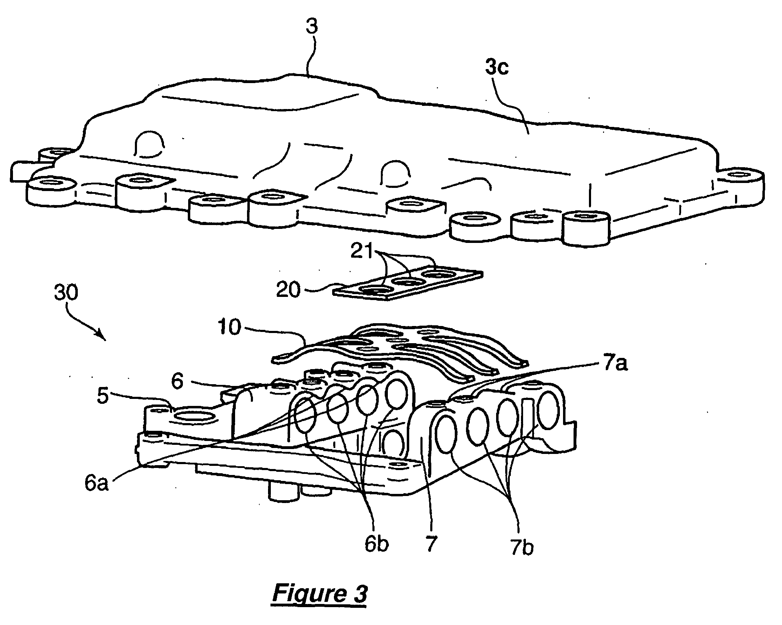

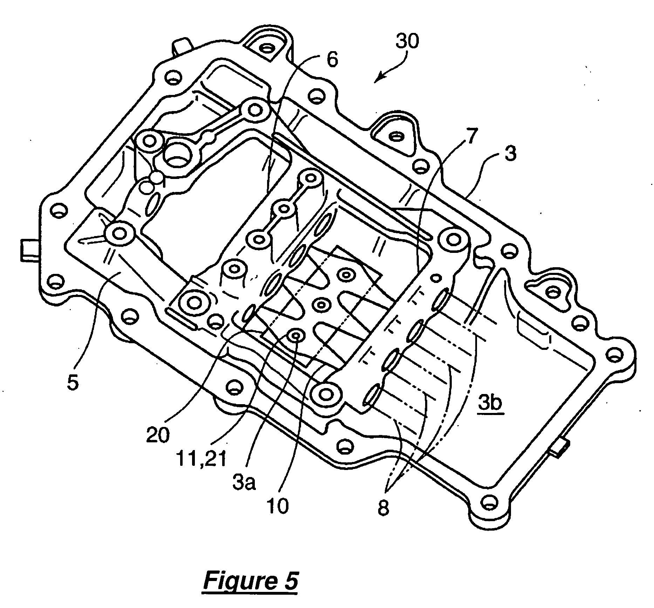

A gearshift operating mechanism 30 shown in Figure 5 has a shift rod support member 5 which is attached to the lower or inner surface of the top cover 3 by fastening it at (at least part of) its surrounding portion with one or more fasteners such as bolts. The shift rod support member 5 has shift rod supports 6 and 7 formed integrally or unitarily with it. The gearshift operating mechanism 30 also comprises one or more, e.g. four shift rods 8 which are substantially axially moveably supported by the shift rod supports 6 and 7 in cylindrical apertures 6b and 7b formed therein and shown in Figures 2 and 3. Referring again to Figure 1, the shift rods 8 are connected with the shift lever 33 through a link mechanism (not shown) so that a movement of the shift lever 33 by a vehicle driver causes a substantially axial movement of at least one of the shift rods 8. The shift rods 8 also have respectively shift forks 40 fixed thereto so that a substantially axial movement of the shift rod 8 causes a substantially axial movement of the synchronizer ring 42 through the shift fork 40 to engage the dog clutch of the gear to be selected so as to accomplish a desired gearshift.

As shown in Figures 2 and 3, thickness around the cylindrical apertures 6b and 7b preferably is substantially constant so as to obtain necessary support strength while avoiding unnecessary weight and/or dimension increase. Accordingly, the upper surfaces of the shift rod supports 6 and 7 are of a wave or bent or snaky shape with one or more (e.g. three) valleys (or recesses or lowered regions) 6a and 7a between the upper surface of the cylindrical apertures 6b and 7b.

A resilient member or a leaf spring member 10 is made of resilient metal such as spring steel, and is (directly or indirectly) arranged on the shift rod support member 5 and below the lower (or inner) surface of the top cover 3 by at least partly positioning spring legs 13 of the leaf spring member 10 within the valleys 6a and 7a of the support member 5. Further a damping sheet 20 preferably is at least partly arranged on the leaf spring member 10 above or on its spring body 12 and/or below the lower or inner surface of the top cover 3. The damping member 20 may be made of elastomeric or resilient material, preferably of rubber.

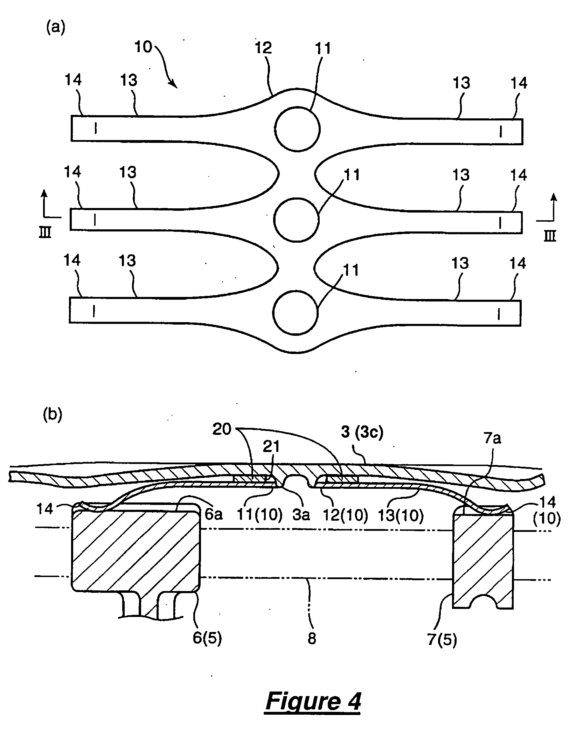

As shown in Figure 4(a) in more detail, the three spring legs 13 of the leaf spring member 10 extends substantially from each of the front and rear sides of the spring body 12. The spring legs 13 are configured such (preferably have substantially S or bent or curved shaped cross sections as shown in Figure 4(b)) as to generate a resilient force. The legs 13 comprises toes 14 which preferably have concaved or bent upper surfaces as part of the substantially S shaped cross section at their ends, and which at least partly fit into the respective valleys 6a and 7a of the support member 5.

The spring body 12 of the leaf spring member 10 has one or more, e.g. three drilled apertures 11 preferably substantially at bases of or corresponding to the spring legs 13. On the other hand, as shown in Figures 4(b) and 5, the lower or inner surface 3b of the top cover 3 comprises one or more, e.g. three bosses 3a at least partly fitting with the respective apertures 11 of the leaf spring member 10 when the shift rod support member 5 is assembled to the top cover 3 as described in more detail below. The damping sheet 20 preferably is shaped to be a substantially rectangular sheet and also comprises one or more, e.g. three apertures 21 substantially coincident the apertures 11 of the leaf spring 10, so as to be positioned properly when assembled between the top cover 3 and the leaf spring 10.

As shown in Figure 4(b), thanks to the substantially S or bent or curved shape, while generating enough resilient force in the direction of the (substantially membranous) vibration of the thin wall portion 3c, the leaf spring member 10 may be arranged in a small vertical gap formed by the valleys 6a and 7a of the shift rod support member 5, the top cover 3 and the damping sheet 20. The leaf spring member is or can be substantially vertically compressed mainly by a distortion of its S shaped leg portions 13, when it is installed in the gap. The resilience of the distortion of the leaf spring member 10 generates spring force to push up the top cover 3 preferably through or via the rubber sheet 20.

Now, the functions of the transmission apparatus 1, mainly the function of the leaf spring member 10 and preferably the damping sheet 20, will be described. When a gear shift operation takes place, e.g. a driver operates the shift lever 33 to select a gear, the engine torque transmitted to the input shaft 35 is converted and output from the output shaft 36. Then in the gear-train 4, tooth tapping noise and various other vibrations and noise (hereafter referred to vibration and the like) are generated. This vibration and the like is transmitted e.g. through the air in the transmission apparatus 1 or the transmission case 2 to the top cover 3 to make a (substantially membranous) vibration of the top cover 3, especially of the substantially flat thin wall portion 3c in the intermediate or substantially center portion.

However on the thin wall portion 3c of the top cover 3, the leaf spring member 10 applies a certain load outwardly of the transmission case 2 particularly through or via the damping sheet 20. If the top cover 3 made a membranous vibration, amplitude substantially around its center would be the largest. Since the load by the leaf spring 10 substantially aligns with a direction of the amplitude movement, the membranous vibration of the top cover 3 is effectively controlled. Further, preferably the damping sheet 20 quickly attenuates and absorbs the membranous vibration of the top cover 3, to preferably enhance the membranous vibration control effect of the top cover 3.

If the leaf spring member 10 and/or the damping sheet 20 were not provided and the large membranous vibration of the top cover 3 were allowed, the membranous vibration could generate radiation noise, which in turn could penetrate the floor panel 50 just above the top cover 3 and could reach to occupants in the vehicle compartment. However, according to the present embodiment, since the membranous vibration of the top cover 3 is effectively controlled, the noise audible in the vehicle compartment from the membranous vibration can be substantially controlled.

Further, since the leaf spring 10 and the damping sheet 20 are arranged or sandwiched at least partly between the shift rod support member 5 and the top cover 3, it is not necessary to provide additional fasteners to attach either of the leaf spring 10 and the rubber sheet 20. This small size and light weight construction can generate the force pressing on the top cover 3.

Now, assembly process of the top cover 3, especially assembly process of the leaf spring member 10 and the damping (preferably rubber or resilient) sheet 20, will be described. Figure 5 shows a vertically reversed state (where a lower or inner surface 3b of the top cover 3 is faced up) of the shift operation mechanism 30. The shift rod support member 5, the shift rods 8 and the like are assembled to the top cover 3 beforehand (subassembly process). After the subassembly, the top cover 3 is returned from the vertical reversed state and fastened to the transmission case 2 by fastening the periphery of the top cover 3 to the periphery of the case opening 2a with fasteners such as bolts. By sub-assembling a part of the gearshift operating mechanism 30 to the top cover 3 beforehand, the transmission assembly 1 can be efficiently assembled.

In the subassembly process described above, prior to assembling the shift rod support member 5 to the top cover 3, the leaf spring 10 and preferably the damping sheet 20 are installed. At first, the damping sheet 20 is placed on the top cover 3 in its reversed state while the damping sheet 20 being positioned with its one or more apertures 21 and the one or more respective bosses 3a formed on the lower surface 3b of the top cover 3. Next, the leaf spring member 10 is placed at least partly on the damping sheet 20 while being positioned with its one or more apertures 10 and the one or more respective bosses 3a. Subsequently, the shift rod support member 5 is attached to the top cover 3 with one or more fasteners such as bolts so that the valleys 6a and 7a contact the legs 13 of the leaf spring 10 around the toes 14. As such, the leaf spring 10 and the rubber sheet 20 may be easily and securely installed by placing them on the vertically reversed top cover 3. After installing the shift rod support member 5 to the top cover 3, it is possible to have the leaf spring 10 make the deflection to generate some force pressing on the top cover 3. Consequently, by utilizing the subassembly process described above, the leaf spring 10 and the dampening (preferably rubber) sheet 20 can be easily arranged between the shift rod support member 5 and the top cover 3.

While the embodiment of the present invention has been described, it can be modified without departing from a scope of the present description. For instance, while in the above embodiment the power transmission apparatus 1 was the automotive manual transmission, the embodiment can be applied to various automatic transmissions including a continuously variable transmission (CVT). Also, it is not limited to the so-called longitudinally mounted transmissions, but for example it can be applied to a so-called laterally mounted transmission with input and output shafts 35, 36 extending in a lateral direction of a vehicle. While the case opening 2a is provided on the transmission case 2 at its upper side, it may be provided at a side or bottom, depending on need to thin the case wall and availability of parts which may push the thin wall portion of the case. Further, the case opening 2a and the case 2 may not be provided at all, instead, the thin wall portion 3c may be directly formed in a proper portion of the case wall 2b. Also, although the present embodiment is especially suitable when ribs or the like are difficult to arrange on the thin wall portion, it may be applied to an embodiment with ribs or the like on the thin wall portion. If the ribs or the like are arranged on the thin wall portion, further membranous vibration control effect can be achieved in addition to the effect by pressing the thin wall portion.

The leaf spring 10 may not necessarily be formed a shape having the spring body 12 and the spring legs 13. Also, although the leaf spring has a benefit that it can generate the pressing force with a simple configuration even in the small gap described above, the thin wall portion of the case 2 or the cover 3 may be pressed by using various other resilient members such as a coil spring, and any load adding mechanism with hydraulic pressure or the like other than the springs may be provided as well. Further, the resilient member itself may be omitted, and for instance, the shift rod support member 5 may be configured to contact directly to the thin wall portion 3c or indirectly through the damping sheet 20 and preload it outwardly by setting the dimension of the support member 5 in the direction of the membranous vibration amplitude.

Although in the above embodiment the leaf spring member 10 is arranged between the top cover 3 and the shift rod support member 5, it may be directly fastened to the top cover 3, or be arranged between the transmission case 2 and the top cover 3. For example, a support portion which supports the toes 14 of the spring leg 13 of the leaf spring 10 may be provided on the transmission case 2 and the leaf spring member 10 as a whole may be provided at least partly between the top cover 3 and the transmission case 2 to make the construction of the leaf spring member 10 and its surroundings to be simple, small and light weight.

The damping sheet 20 may not be needed. Also, while the damping sheet 20 is made of rubber in the above embodiment, the material of the damping sheet is not limited to rubber and it may be anything having rubber like elasticity or resiliency at a normal temperature. For example, thermoplastic elastomeric resin may be used.

Further, the resilient member or the leaf spring member 10 itself may be omitted, and for instance, the shift rod support member 5 may be configured to contact directly to the thin wall portion 3c or indirectly through the damping sheet 20 and preload it outwardly by setting the dimension of the support member 5 in the direction of the membranous vibration amplitude.

## Claims

1. A mechanical power transmission apparatus (1) comprising:
a case (2) defining a cavity;
moveable parts (5) arranged at least partly within said cavity;
one or more fixed parts (10; 20) arranged at least partly within said cavity, the fixed parts (10; 20) including one or more parts moveably supporting said moveable parts (5); and
a wall (3) at least partly constituting said case (2),
wherein said wall (3) has a thin wall portion (3c) formed therein, and that the said thin wall portion (3c) is substantially constantly pressed in an outward direction of said cavity by one of said fixed parts (10; 20).

2. The mechanical power transmission apparatus (1) as described in claim 1, wherein said case (2) comprises:
an opening (2a); and
a cover (3) which is to be attached to said case (2) to at least partly close said opening (2a) and comprises at least a part of said thin wall portion (3c).

3. The mechanical power transmission apparatus (1) as described in claim 2, wherein said one of said fixed parts (10; 20) is to be attached to said cover (3) at a surrounding of or adjacent to said thin wall portion (3c).

4. The mechanical power transmission apparatus (1) as described in any one of the preceding claims, wherein a resilient member (20) is arranged at least partly between said thin wall portion (3c) and said one of said fixed parts (10) and preferably resiliently presses said thin wall portion (3c).

5. The mechanical power transmission apparatus (1) as described in any one of the preceding claims, wherein a resilient member (20) is arranged at least partly between said thin wall portion (3c) and said wall of said case (2).

6. The mechanical power transmission apparatus (1) as described in claim 4 or 5, wherein an elastomeric member which is arranged between said thin wall portion (3c) and said resilient member (20) and which preferably elastomerically presses said thin portion (3c).

7. The mechanical power transmission apparatus (1) as described in any one of claims, wherein said fixed part (20), preferably said resilient member (20) comprises a leaf spring.

8. The mechanical power transmission apparatus (1) as described in any one of the preceding claims, wherein said one of said fixed parts slidably supports a rod (8).

9. The mechanical power transmission apparatus (1) as described in claim 7, wherein said rod (8) comprises a shift rod (8) which substantially axially moves for switching gears transmitting power.

10. An automotive vehicle comprising a power transmission apparatus (1) according to one of the preceding claims.

11. The automotive vehicle as described in claim 10, wherein said mechanical power transmission apparatus (1) is arranged under a floor panel (50) of the automotive vehicle.

12. An assembly process for assembling a mechanical power transmission apparatus (1), comprising the following steps:
providing a case (2) defining a cavity and being at least partly defined by a wall (3) having a thin wall portion (3c) formed therein;
at least partly arranging moveable parts (5) within said cavity being supported by one or more fixed parts (10; 20) arranged at least partly within said cavity; and
substantially constantly pressing said thin wall portion (3c) in an outward direction of said cavity by one of said fixed parts (10; 20).

13. The assembly process according to claim 12, wherein the fixed parts (10; 20), preferably comprising at least one of a resilient member (10) and a damping element (20), are installed prior to arranging of the moveable parts (5), preferably comprising a shift rod support member (5).
